# EUROPEAN PATENT APPLICATION

(11) **EP 1 473 853 A1**
(43) Date of publication of application: **03.11.2004**
(21) Application number: 03795200.9
(22) Date of filing: 14.07.2003
(51) Int. Cl.: H04B 7/26

(54) **RADIO COMMUNICATION DEVICE, RECEIVER DEVICE, AND RECEPTION MANNER SELECTING METHOD**

(30) Priority: 10.09.2002 JP 2002264098; 08.04.2003 JP 2003104428
(71) Applicant: MATSUSHITA ELECTRIC INDUSTRIAL CO., LTD., Kadoma-shi, Osaka 571-8501 (JP)
(72) Inventor: SHINOI, Kenichiro, Yokohama-shi, Kanagawa 233-0013 (JP); SUDO, Hiroaki, Yokohama-shi, Kanagawa 224-0045 (JP)
(74) Representative: Grünecker, Kinkeldey, Stockmair & Schwanhäusser Anwaltssozietät
(86) International application number: PCT/JP2003/008881
(87) International publication number: WO 2004/025876

(57) **Abstract**

A wireless communication apparatus and a receiving scheme selection method are provided for improved overall system throughput. SIR measurer (106) measures the SIR of a known signal. Doppler frequency detector (108) detects the Doppler frequency from the received signal and measures the Doppler shift amount. The Doppler shift amount serves as an indicator of the moving speed of the mobile station apparatus. Interference power measurer (110) measures interference power from other cells. Known signal obtainer (104), SIR measurer (106), Doppler frequency detector (108), and interference power measurer (110) constitute a propagation environment estimator in this embodiment. Based on the SIR, Doppler shift amount, and interference power, receiving scheme selector (112) selects a receiving scheme of either RAKE reception or linear equalization.

## Description

### Technical Field

The present invention relates to a wireless communication apparatus, a receiving apparatus, and a receiving scheme selection method.

### Background Art

Heretofore, in a wireless communication system, the use of adaptive modulation schemes that select, for example, MCS (Modulation and Coding Schemes, which refer to transmission rate in view of the modulation scheme and transmission rate) for improved overall system throughput in accordance with the propagation environment has been considered.

Upon application of these adaptive modulation schemes of MCS selection to transmission data from the base station apparatus, first, the mobile station apparatus receives a known signal transmitted from the base station apparatus. Using the received known signal, the mobile station apparatus measures reception quality such as the SIR (Signal to Interference Ratio) , and, based on this reception quality, reports a CQI (Channel Quality Indicator), which represents the condition of the propagation environment, to the base station apparatus. Then, the base station apparatus makes reference to a prescribed table and selects the MCS that correspond to the CQI, and applies encoding and modulation as provided for by the selected MCS, and transmits the result to the mobile station apparatus.

This allows the base station apparatus to transmit the data at high transmission rate to the mobile station apparatus in a good propagation environment and transmit the data at low transmission rate to the mobile station apparatus in a poor propagation environment, thereby minimizing the occurrence of errors and improving overall system throughput.

Upon application of modulation schemes like this for use in a multipath environment with interference waves suchasdelaywaves, asdisclosedin, for example, Japanese Patent Publication No. HEI10-056420, it is possible to reduce the impact of interference waves such as by estimating the levels of the interference waves and selecting modulation schemes according to the estimation results, and by performing RAKE reception at the receiving end.

However, with prior art adaptive modulation schemes, if transmission power is low at the base station apparatus that transmits data, selecting the MCS that will result in high transmission rate leads to much heightened error rate, especially in the multipath environment. So, there is little likelihood of selecting such high MCS. Accordingly, there is a problem that it is difficult to improve overall system throughput enough.

In addition, in case the mobile station apparatus that receives data moves at a high speed, if the data is transmitted by MCS based on the CQI reported to the base station apparatus, the propagation environment in which the data is actually received might be different from the propagation environment at the time the CQI was reported. Accordingly, there is a problem of high error rate with the received data and reduced throughput.

### Disclosure of Invention

It is therefore an object of the present invention to improve overall system throughput.

The present inventors have discovered that, when the mobile station apparatus moves at a relatively low speed, the use of a linear equalization device reduces the impact of multipath, whereas, when the mobile station apparatus moves at a high speed or interference power from other cells is significant, performing RAKE reception achieves better reception performance than by the linear equalization device. The present inventors have then arrive at the present invention upon discovering that, by using linear equalization and RAKE reception on an adaptive basis according to changes in the propagation environment, it is possible to reduce the impact of multipath and select MCS of high transmission rate.

The gist of the present invention is therefore to switch between the receiving schemes that reduce the impact of multipath, including linear equalization and RAKE reception, according to changes in the propagation environment so as to allow data transmission by modulation schemes of optimal transmission rate.

In accordance with one aspect of the present invention, a wireless communication apparatus is provided, and this wireless communication apparatus has an estimator that estimates a propagation environment of a signal and a selector that selects a receiving scheme for the signal from two or more receiving schemes including at least linear equalization.

In accordance with another aspect of the present invention, a receiving apparatus is provided, and this receiving apparatus has an obtainer that obtains information relating to a receiving scheme selected from two or more receiving schemes that include at least linear equalization in accordance with a propagation environment and a receiver that receives a signal received by the receiving scheme specified by the receiving scheme information obtained.

In accordance with yet another aspect of the present invention, a receiving scheme selection method is provided, and this method has the steps of estimating a propagation environment of a signal and selecting a receiving scheme for the signal from two or more receiving schemes that include at least linear equalization in accordance with the propagation environment estimated.

### Brief Description of Drawings

FIG.1 is a block diagram showing the configuration of a mobile station apparatus according to Embodiment 1 of the present invention;
FIG.2 is a flow chart showing the receiving scheme selection operation at the mobile station apparatus according to Embodiment 1;
FIG.3 is a block diagram showing the configuration of a mobile station apparatus according to Embodiment 2 of the present invention;
FIG. 4 is a flow chart showing the CQI determination operation at the mobile station apparatus according to Embodiment 2;
FIG.5 is a diagram for illustrating the operations of the mobile station apparatus according to Embodiment 2;
FIG.6 is a block diagram showing the configuration of a base station apparatus according to Embodiment 3 of the present invention;
FIG.7 is a block diagram showing the configuration of a mobile station apparatus according to Embodiment 3;
FIG.8 is a flow chart showing the receiving scheme selection operation at the base station apparatus according to Embodiment 3;
FIG.9 is a flow chart showing the MCS selection operation at the base station apparatus according to Embodiment 3;
FIG.10 is a block diagram showing the configuration of a base station apparatus according to Embodiment 4 of the present invention;
FIG.11 is a block diagram showing the configuration of a mobile station apparatus according to Embodiment 4;
FIG.12 is a flow chart showing the receiving scheme selection operation at the mobile station apparatus according to Embodiment 4;
FIG.13 is a block diagram showing the configuration of a base station apparatus according to Embodiment 5 of the present invention;
FIG.14 is a block diagram showing the configuration of a mobile station apparatus according to Embodiment 6 of the present invention;
FIG.15 is a flow chart showing the receiving scheme selection operation at the mobile station apparatus according to Embodiment 6;
FIG.16 is a block diagram showing the configuration of a mobile station apparatus according to Embodiment 7 of the present invention; and
FIG.17 is a flow chart showing the receiving scheme selection operation at the mobile station apparatus according to Embodiment 7.

### Best Mode for Carrying Out the Invention

Embodiments of the present invention will be described in detail below with reference to the accompanying drawings.

### (Embodiment 1)

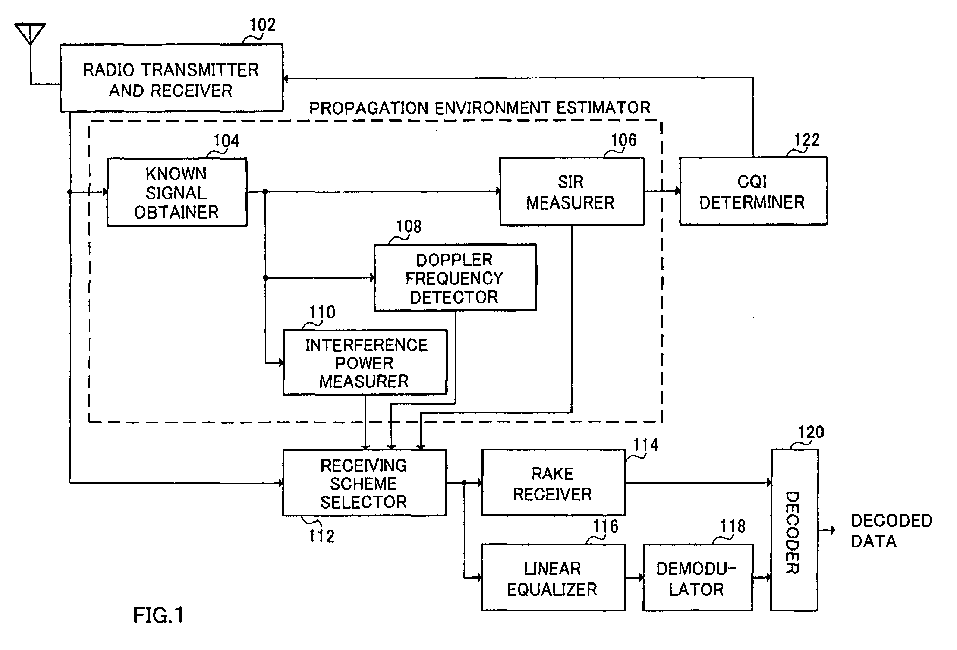

FIG.1 is a block diagram showing the configuration of a mobile station apparatus according to Embodiment 1 of the present invention. The mobile station apparatus shown in FIG.1 has radio transmitter and receiver 102, known signal obtainer 104, SIR measurer 106, Doppler frequency detector 108, interference power measurer 110, receiving scheme selector 112, RAKE receiver 114, linear equalizer 116, demodulator 118, decoder 120, and CQI determiner 122.

Radio transmitter and receiver 102 transmits and receives a signal through an antenna, and performs predetermined radio processing (including down-conversion, A/D conversion, D/A conversion, and up-conversion). Known signal obtainer 104 obtains a known signal from the signal received by radio transmitter and receiver 102.

SIRmeasurer 106 measures the SIRof the known signal. The SIR represents the ratio of signal power to interference power. According to this SIR, the CQI to be reported to the communicating base station apparatus is determined, and the base station apparatus selects the MCS with reference to this CQI. Doppler frequency detector 108 detects the Doppler frequency from the received signal and measures the Doppler shift amount. The Doppler shift amount serves as an indicator of the moving speed of the mobile station apparatus. Interference power measurer 110 measures interference power from other cells. Known signal obtainer 104, SIR measurer 106, Doppler frequency detector 108, and interference power measurer 110 constitute a propagation environment estimator in this embodiment.

Based on the SIR, Doppler shift amount, and interference power, receiving scheme selector 112 selects the receiving scheme of either RAKE reception or linear equalization. The receiving scheme selection at receiving scheme selector 112 will be later described in detail.

When receiving scheme selector 112 selects RAKE reception, RAKE receiver 114 receives the signal by way of RAKE reception. When receiving scheme selector 112 selects linear equalization, linear equalizer 116 performs linear equalization with the received signal. The linear equalization device provided in linear equalization 116 has a certain limit with the integration period for despreading and integrating the known signal, and so it is well known that performance deteriorates when the moving speed of the mobile station apparatus becomes higher. Demodulator 118 demodulates the linear-equalized signal. Decoder 120 decodes the RAKE-received signal or the demodulated signal, and obtains the decoded data.

CQI determiner 122 determines an CQI that corresponds to the SIR measured by SIR measurer 106, and has radio transmitter and receiver 102 transmit this CQI.

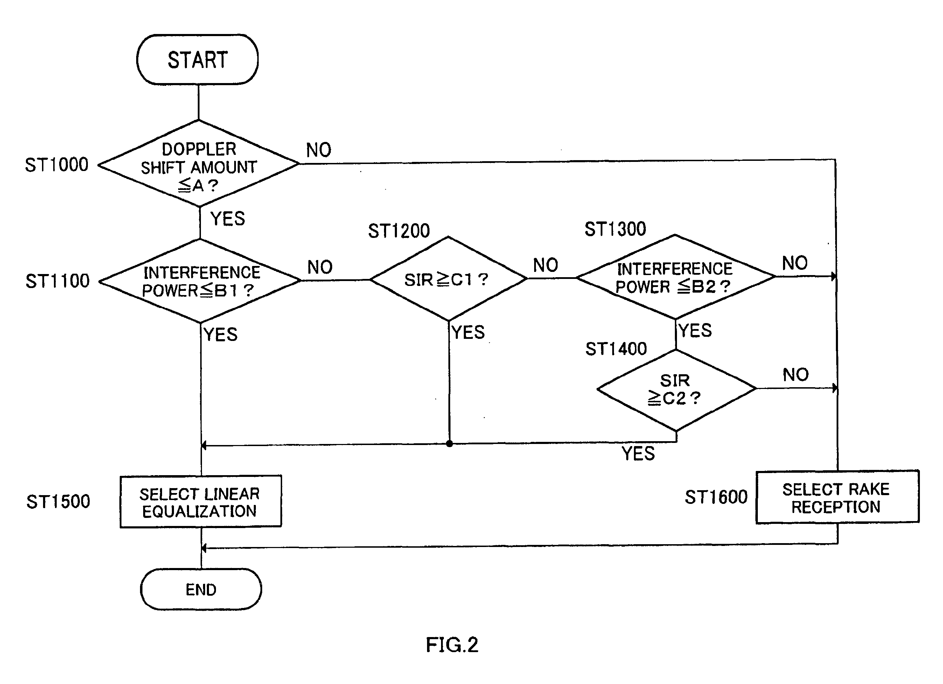

Next, the receiving scheme selection operation in the mobile station apparatus of the above configurations will be explained in detail with reference to the flow chart of FIG.2. Incidentally, the following selection operation takes place in receiving scheme selector 112.

First, the Doppler shift amount measured by Doppler frequency detector 108 is compared to predetermined threshold level A (ST1000).

If as a result of this comparison the Doppler frequency amount is greater than predetermined threshold level A, a decision is made that the mobile station apparatus is moving at a speed that the linear equalization device provided in linear equalizer 116 is unable to follow, and RAKE reception is selected for the receiving scheme (ST1600).

If the Doppler frequency amount is below predetermined threshold level A, interference power from other cells as measured by interference power measurer 110 is compared to predetermined threshold level B1 (ST1110). If as a result of this comparison the interference power is below predetermined threshold level B1, linear equalization is selected for the receiving scheme (ST1500). Moreover, if the interference power is greater than predetermined threshold level B1, the SIR as measured by SIR measurer 106 is compared to predetermined threshold level C1 (ST1200). If the SIR is greater than predetermined threshold level C1, linear equalization is selected for the receiving scheme (ST1500).

If the SIR is below predetermined threshold level C1, the interference power is again compared to predetermined threshold level B2 (ST1300). Predetermined threshold level B2 for comparison with interference power in ST1300 assumes a greater level than predetermined threshold level B1 in ST1100. If as a result of this comparison the interference power is greater than predetermined threshold level B2, RAKE reception is selected for the receiving scheme (ST1600).

On the other hand, if the interference power is below predetermined threshold level B2, the SIR is then compared to predetermined threshold level C2 (ST1400). Threshold level C2 for comparison with the SIR in ST1400 assumes a greater level than predetermined threshold level C1 in ST1200. If as a result of this comparison the SIR is below predetermined threshold level C2, RAKE reception is selected for the receiving scheme (ST1600). If the SIR is greater than predetermined threshold level C2, linear equalization is selected for the receiving scheme (ST1500).

Where the receiving scheme is thus selected, when the Doppler shift amount is great--in other words, when the mobile station apparatus is moving at a high speed--the linear equalization device in linear equalizer 116 is unable to follow. Consequently, RAKE reception is selected for the receiving scheme. In addition, when the interference power from other cells is great and the SIR is low, RAKE reception is likewise selected for the receiving scheme. On the other hand, when the Doppler frequency amount is small--in other words, when the mobile station apparatus is moving at a low speed--and the impact of interference is insignificant, linear equalization is selected for the receiving scheme.

Thus, according to this embodiment, based on the SIR, Doppler shift amount, and interference power, liner equalization is selected for the receiving scheme when the mobile station apparatus is moving at a low speed and the impact of interference is insignificant. Consequently, when data is transmitted by MCS that will result in high transmission rates, even if RAKE reception fails to achieve desired error rates, it is still possible to reduce the impact of multipath and achieve the desired error rates by means of linear equalization and improve overall system throughput.

Although a case has been described with this embodiment where, upon selection of the receiving scheme, interference power and the SIR are each provided with two threshold levels, the present invention is by no means limited to this, and any number of threshold levels can be set.

### (Embodiment 2)

A feature of Embodiment 2 of the present invention lies in having the mobile station apparatus select the receiving scheme in accordance with the propagation environment and at the same time transmit to the base station apparatus the kind of CQI's that will have high transmission rate MCS selected.

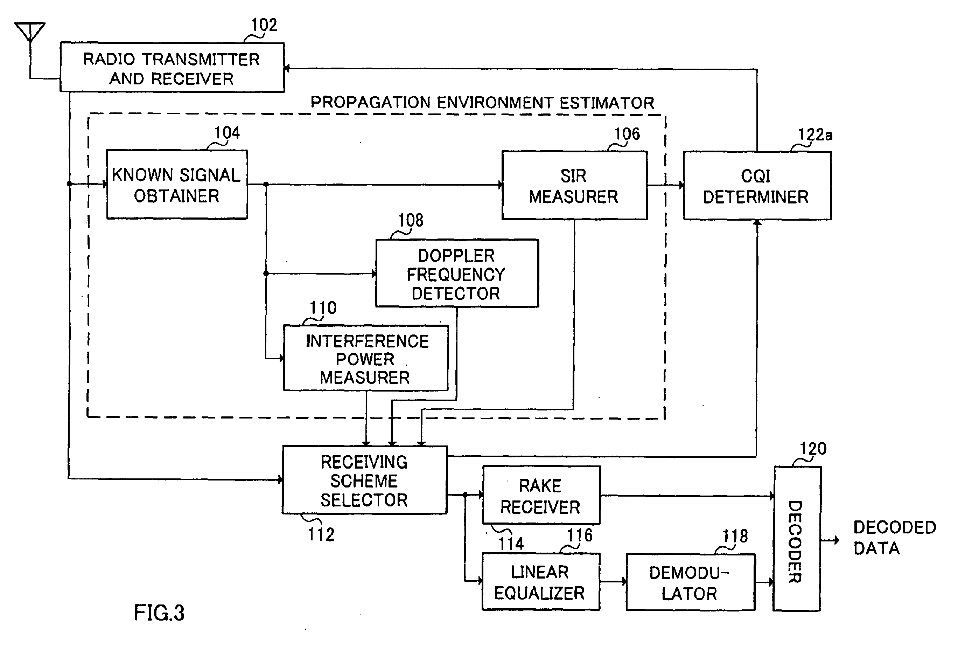

FIG.3 is a block diagram showing the configuration of a mobile station apparatus according to this embodiment. Parts of the mobile station apparatus shown in this figure that are identical to those of the mobile station apparatus shown in FIG.1 are assigned the same numerals without further explanations.

The mobile station apparatus shown in FIG.3 has radio transmitter and receiver 102, known signal obtainer 104, SIR measurer 106, Doppler frequency detector 108, interference power measurer 110, receiving scheme selector 112, RAKE receiver 114, linear equalizer 116, demodulator 118, decoder 120, and CQI determiner 122a.

CQI determiner 122a determines a CQI that corresponds to the SIR measured by SIR measurer 106, and, when linear equalization is selected for the receiving scheme, determines another CQI and, of these two CQI' s, has the CQI that will have MCS of higher transmission rates selected and transmitted form radio transmitter and receiver 102.

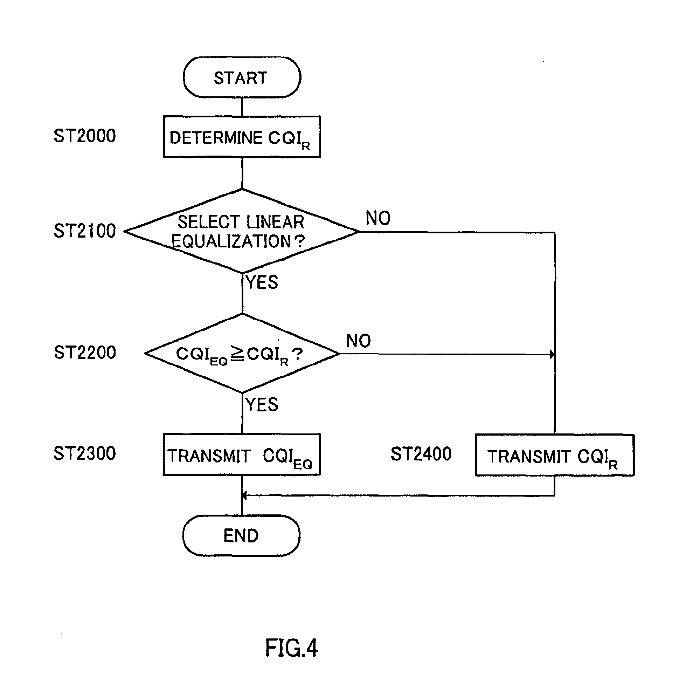

Next, the CQI determination operation in the mobile station apparatus of the above configurations will be described in detail with reference to the flow chart of FIG.4. Incidentally, the following CQI determination operation takes place in CQI determiner 122a. Moreover, let us assume that CQI determiner 122a has information reported thereto as to which receiving scheme of RAKE reception and linear equalization is selected by receiving scheme selector 112. The receiving scheme selection operation by receiving scheme selector 112 is the same as in Embodiment 1, and further explanations thereof will be omitted.

First, CQI_{R} for when RAKE reception is selected for the receiving scheme is determined based on the SIR measured by SIR measurer 106 (ST2000). This CQI_{R} refers to a value that defines the transmission bit length, the number of multiplex codes, and the modulation scheme (that is, the MCS). When this value is reported to the base station apparatus, the base station apparatus selects the above MCS and transmits the data.

Then, based on the information reported from receiving scheme selector 112, a decision is made as to whether or not the selected receiving scheme is linear equalization (ST2100). If linear equalization is not selected, CQI_{R} is transmitted from radio receiver and transmitter 102 (ST2400).

On the other hand, in case linear equalization is selected, CQI_{EQ} is determined anew on the premise that linear equalization is going to be performed, and a comparison is drawn between CQI_{EQ} and CQI_{R} (ST2200). If as a result of this comparison CQI_{EQ} is greater than CQI_{R}, CQI_{EQ} is transmitted from radio transmitter and receiver 102 (ST2300). If CQI_{EQ} is below CQI_{R}, CQI_{R} is transmitted from radio transmitter and receiver 102 (ST2400).

By this means, when receiving scheme selector 112 selects linear equalization for the receiving scheme and yet the data transmission can be performed by MCS of still higher transmission rates, the kind of CQI that will have such MCS selected is reported to the base station apparatus. Consequently, the base station apparatus is able to transmit the data by high transmission rate MCS that cannot be selected if the mobile station apparatus performs RAKE reception alone.

Thus, according to this embodiment, when the receiving scheme of linear equalization is selected, such CQI's are reported to the base station apparatus that will have MCS of higher transmission rates selected, so that the base station apparatus is able to perform data transmission at heightened transmission rates and improve overall system throughput.

### (Embodiment 3)

A feature of Embodiment 3 of the present invention lies in having the base station apparatus select and report to the mobile station apparatus the receiving scheme in accordance with the propagation environment.

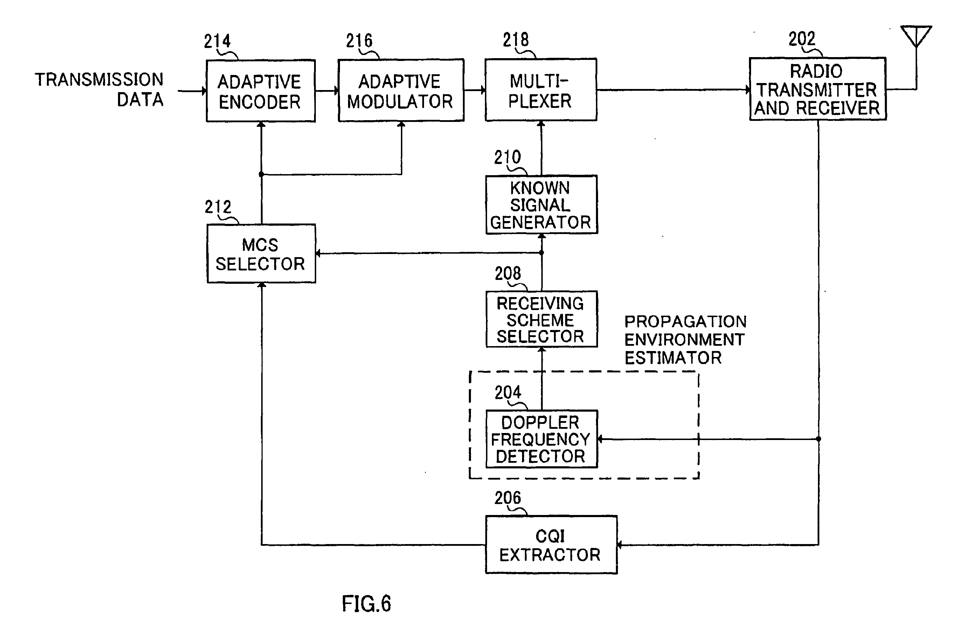

FIG.6 is a block diagram showing the configuration of a base station apparatus according to this embodiment. The base station apparatus shown in FIG.6 has radio transmitter and receiver 202, Doppler frequency detector 204, CQI extractor 206, receiving scheme selector 208, report signal generator 210, MCS selector 212, adaptive encoder 214, adaptive modulator 216, and multiplexer 218.

Radio transmitter and receiver 202 transmits and receives a signal through an antenna, and performs predetermined radio processing (including down-conversion, A/D conversion, D/A conversion, and up-conversion). Doppler frequency detector 204 detects the Doppler frequency from the received signal, and measures the Doppler shift amount. The Doppler shift amount serves as an indicator of the moving speed of the mobile station apparatus. Doppler frequency detector 204 constitutes a propagation environment estimator in this embodiment. CQI extractor 206 extracts the CQI contained in the received signal.

For the receiving scheme at the communicating mobile station apparatus, receiving scheme selector 208 selects the receiving scheme of either RAKE reception or linear equalization based on the Doppler shift amount. Report signal generator 210 generates a report signal for reporting the selected receiving scheme.

MCS selector 212 selects the MCS that correspond to the CQI, and reports information about the selected MCS to adaptive encoder 214 and adaptive modulator 216. Adaptive encoder 214 encodes the data at the coding rate provided for by the selected MCS. Adaptive modulator 216 modulates the transmission data by the modulation scheme provided for by the selected MCS.

Multiplexer 218 multiplexes the transmission data and the report signal, and transmits the result via radio transmitter and receiver 202.

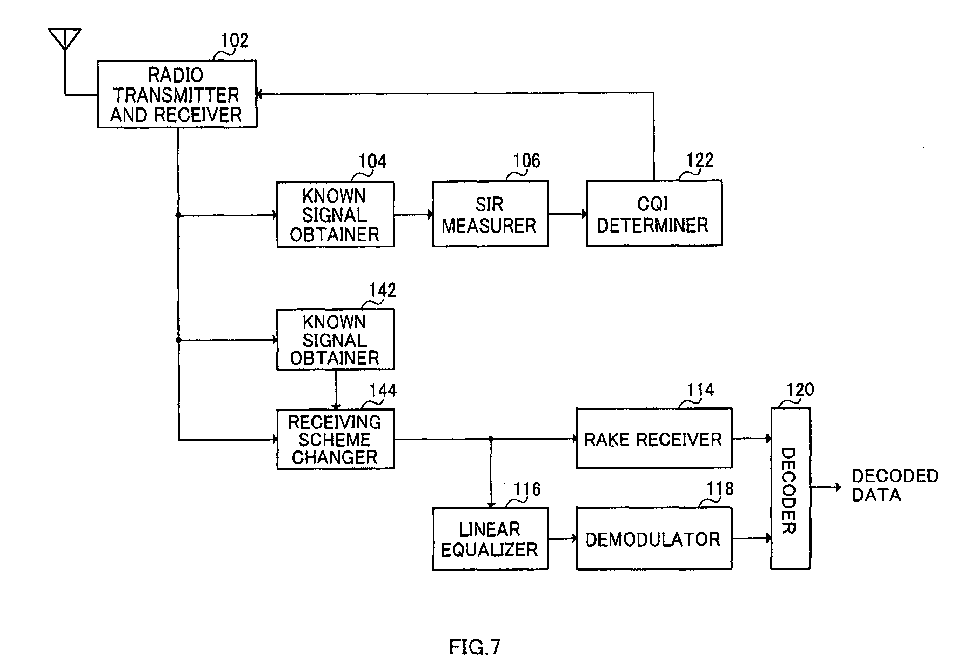

FIG.7 is a block diagram showing the configuration of a mobile station apparatus according to this embodiment. Parts of the module station apparatus shown in this figure that are identical to those of the mobile station apparatus shown in FIG.1 are assigned the same numerals without further explanations.

The mobile station apparatus shown in FIG.7 has radio transmitter and receiver 102, known signal obtainer 104, SIR measurer 106, RAKE receiver 114, linear equalizer 116, demodulator 118, decoder 120, CQI determiner 122, report signal obtainer 142, and receiving scheme changer 144.

Report signal obtainer 142 obtains the report signal contained in the received signal. In accordance with the report signal, receiving scheme changer 144 changes the receiving scheme to RAKE reception or to linear equalization.

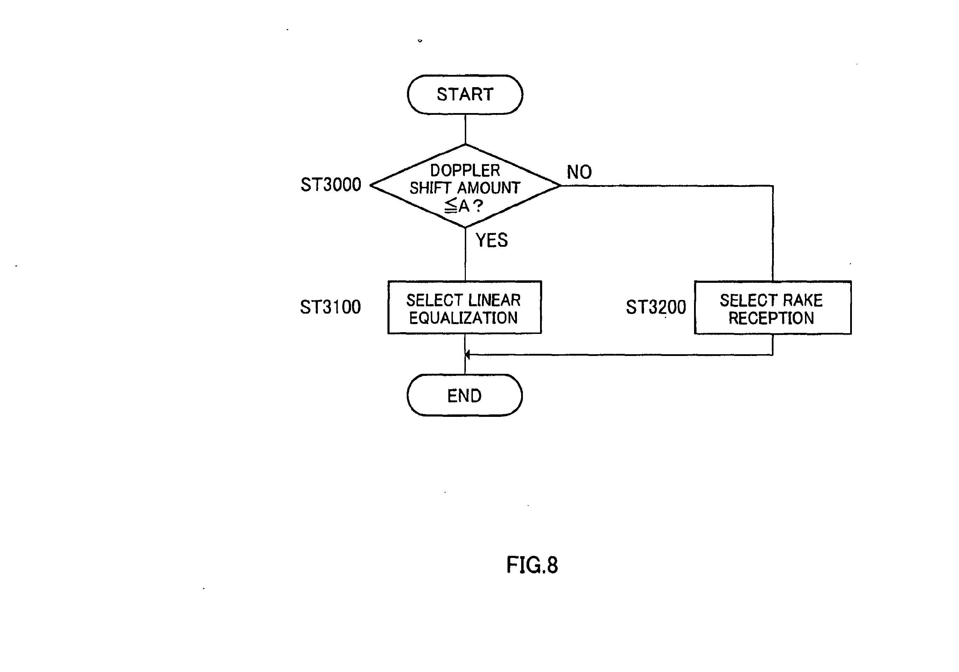

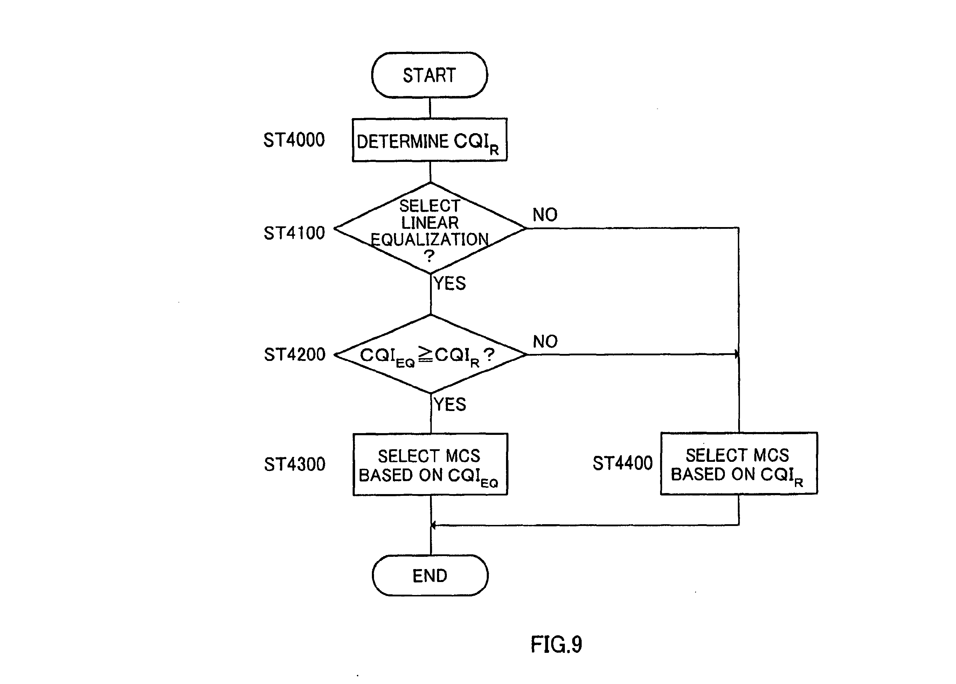

Next, the operations of the base station apparatus and mobile station apparatus of the above configurations will be described with reference to the flow charts of FIG.8 and FIG.9.

First, the mobile station apparatus determines CQI_{R} for when RAKE reception is selected for the receiving scheme in CQI determiner 122 based on the SIR measured by SIR measurer 106, and transmits a signal containing this CQI_{R} via radio transmitter and receiver 102. The transmitted signal is received by radio transmitter and receiver 202 of the base station apparatus and subjected to predetermined radio processing.

Then, Doppler frequency detector 204 detects the Doppler frequency from the received signal and measures the Doppler shift amount. When the Doppler shift amount is measured, receiving scheme selector 208 selects the receiving scheme following the flow shown in FIG.8. That is, the Doppler shift amount is compared to predetermined threshold level A (ST3000). If the Doppler shift amount is below predetermined threshold level A, linear equalization is selected for the receiving scheme at the mobile station apparatus (ST3100). On the other hand, if the Doppler shift amount is greater than predetermined threshold level A, a decision is made that the mobile station apparatus is moving at a high moving speed and that the linear equalization device is unable to follow, and consequently RAKE reception is selected for the receiving scheme at the mobile station apparatus (ST3200).

The selected receiving scheme is reported to report signal generator 210 and MCS selector 212, and report signal generator 210 generates a report signal for reporting the selected receiving scheme to the base station apparatus.

On the other hand, when CQI extractor 206 extracts CQI_{R} contained in the received signal, MCS selector 212 selects the MCS following the flow shown in FIG.9. That is, first, CQI_{R} for when RAKE reception is selected for the receiving scheme at the mobile station apparatus is determined at the value extracted by CQI extractor 206 (ST4000). A decision is made as to whether or not the receiving scheme at the mobile station apparatus reported from receiving scheme selector 208 is linear equalization (ST4100). If linear equalization is not selected, MCS that correspond to CQI_{R} are selected (ST4400). On the other hand, if linear equalization is selected, CQI_{EQ} is determined anew on the premise that linear equalization is going to be performed, and a comparison is drawn between CQI_{EQ} and CQI_{R} (ST4200). If as a result of this comparison CQI_{EQ} is greater than CQI_{R}, MCS that correspond to CQI_{EQ} are selected (ST4300). If CQI_{EQ} is below CQI_{R}, MCS that correspond to CQI_{R} are selected (ST4400).

By this means, when receiving scheme selector 208 selects linear equalization for the receiving scheme at the mobile station apparatus and yet the data transmission can be performedbyMCS of still higher transmission rates, such MCS will be selected.

The transmission data is encoded and modulated at the coding rate and by the modulation scheme provided for by the selected MCS, in adaptive encoder 214 and adaptive modulator 216, respectively. In addition, the transmission data and the report signal generated in report signal generator 210 are multiplexed in multiplexer 218, and the result is transmitted via radio transmitter and receiver 202.

The signal transmitted from the base station apparatus is received in radio transmitter and receiver 102 of the mobile station apparatus and subjected to predetermined radio processing.

Then, the known signal is obtained through known signal obtainer 104, the SIR is measured again by SIR measurer 106, and CQI_{R} is determined by CQI determiner 122.

In addition, know signal obtainer 142 obtains the report signal contained in the received signal, and information about the receiving scheme to be selected at the mobile station apparatus is thus obtained. This information is output to receiving scheme changer 144, and receiving scheme changer 144 controls one of RAKE receiver 114 and linear equalizer 116 into operation.

By this means, even if the base station apparatus selects linear equalization for the receiving scheme at the mobile station apparatus and the data is transmitted by corresponding high transmission rate MCS, linear equalizer 116 operates correctly, and the received data is subjected to linear equalization and then demodulated in demodulator 118, and the decoded data is obtained through decoder 120.

Thus, according to this embodiment, the base station apparatus selects the receiving scheme at the mobile station apparatus and reports the selected modulation scheme to the mobile station apparatus, and, when selecting linear equalization for the receiving scheme, selects MCS on the premise that linear equalization is going to be performed at the mobile station apparatus, and transmits data accordingly. Consequently, the base station apparatus is able to perform data transmission at heightened transmission rates, and the mobile station apparatus is able to perform linear equalization with the received data and correctly demodulate and decode the data, thereby improving overall system throughput.

### (Embodiment 4)

A feature of Embodiment 4 of the present invention lies in having the base station apparatus detect when the integration period for the known signal that enables the mobile station apparatus to perform linear equalization--in other words, the period for updating the coefficient in the linear equalization device--can be shortened, thereby making it possible to select linear equalization for the receiving scheme even when the mobile station apparatus is moving at a high speed.

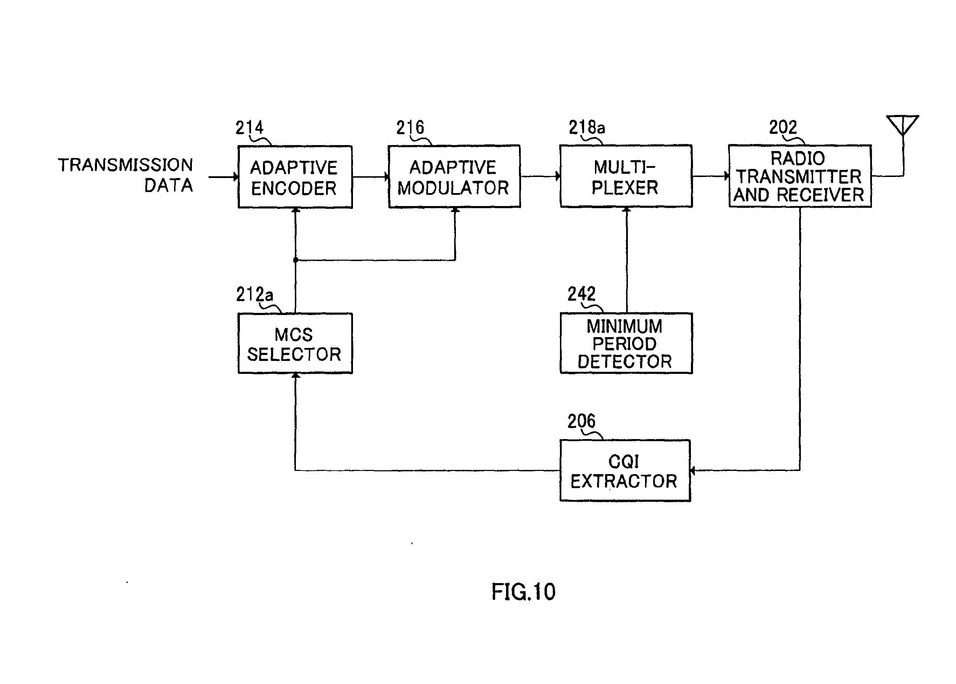

FIG.10 is a block diagram showing the configuration of a base station apparatus according to this embodiment. Parts of the base station apparatus shown in this figure that are identical to those of the base station apparatus shown in FIG.6 are assigned the same numerals without further explanations.

The base station apparatus shown in FIG. 10 has radio transmitter and receiver 202, CQI extractor 206, MCS selector 212a, adaptive encoder 214, adaptive modulator 216, multiplexer 218a, and minimum period detector 242.

MCS selector 212a selects the MCS that correspond to the CQI extracted by CQI extractor 206.

Multiplexer 218a multiplexes the transmission data and information about the minimum period detected by minimum period detector 242, and transmits the result via radio transmitter and receiver 202.

Minimum period detector 242 detects the minimum period whereby the coefficient in the linear equalization device provided in the mobile station apparatus can be updated. Now, when the linear equalization device provided in the mobile station apparatus performs integration with the known signal, even if the integration period is shortened (for example, if one known signal symbol is formed with 256 chips, shortened to a 1/2 symbol equivalent of 128 chips or shortened to a 1/4 period equivalent of 64 chips), linear equalization can be performed correctly unless the kind of code that does not become orthogonal is used for multiplexing with other signals. This integration period that is shortened to a maximum level is called the minimum period.

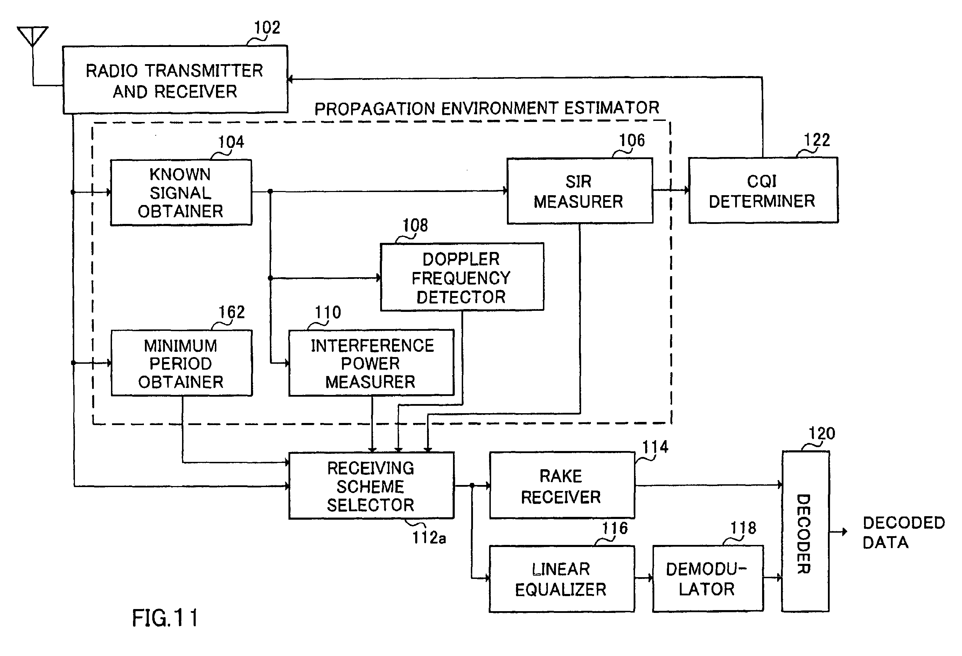

FIG.11 is a block diagram showing the configuration of a mobile station apparatus according to this embodiment. Parts of the mobile station apparatus shown in FIG.11 that are identical to those of the mobile station apparatus shown in FIG.1 are assigned the same numerals without further explanations.

The mobile station apparatus shown in FIG.11 has radio transmitter and receiver 102, known signal obtainer 104, SIR measurer 106, Doppler frequency detector 108, interference power measurer 110, receiving scheme selector 112a, RAKE receiver 114, linear equalizer 116, demodulator 118, decoder 120, CQI determiner 122, and minimum period obtainer 162.

Based on the SIR, Doppler shift amount, interference power, and the minimum period, receiving scheme selector 112a selects the modulation scheme of either RAKE reception or linear equalization. The receiving scheme selection by receiving scheme selector 112a will be later described in detail.

Minimum period obtainer 162 obtains information about the minimum period contained in the received signal, andreports this to receiving scheme selector 112a. Known signal obtainer 104, SIR measurer 106, Doppler frequency detector 108, interference power measurer 110, and minimum period obtainer 162 constitute a propagation environment estimator in this embodiment.

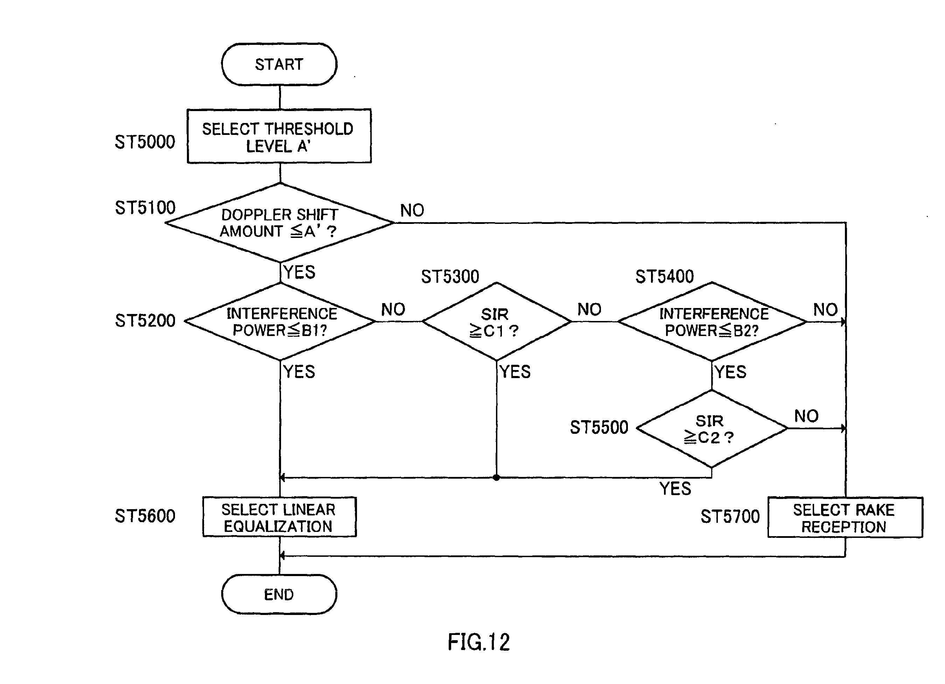

Next, the operations of the base station apparatus and the mobile station apparatus of the above configurations will be described with reference to the flow chart of FIG.12.

First, the mobile station apparatus determines a CQI in CQI determiner 122 based upon the SIR measured by SIR measurer 106, and transmits a signal containing this CQI via radio transmitter and receiver 102. The transmitted signal is received by 202 and subjected to predetermined radio processing. Then, CQI extractor 206 extracts the CQI contained in the received signal, and MCS selector 212a selects the MCS that correspond to the CQI.

The transmission data is encoded and modulated at the coding rate and by the modulation scheme provided for by the selected MCS, in adaptive encoder 214 and adaptive modulator 216, respectively.

Meanwhile, minimum period detector 242 detects the minimum period in the linear equalization device provided in the mobile station apparatus based upon information as to whether or not the kind of code is used that does not become orthogonal when the integration period is shortened upon despreading of the know signal. The detected minimum period is multiplexed with the transmission data in multiplexer 218a and transmitted via radio transmitter and receiver 202.

The signal transmitted from the base station apparatus is received in radio transmitter and receiver 102 and subjected to predetermined radio processing.

Then, the known signal is obtained by known signal obtainer 104, the SIR is measured again by SIR measurer 106, the CQI is determined by CQI determiner 122, and the SIR, Doppler shift amount, and interference power are reported to receiving scheme selector 112a.

The information about the minimum period, contained in the received signal, is obtained by minimum period obtainer 162, and the minimum period is reported to receiving scheme selector 112a.

The receiving scheme selection operation by receiving scheme selector 112a will be described below with reference to the flow chart of FIG.12.

First, based on the minimum period, threshold level A' for determining the Doppler shift amount is selected (ST5000). This threshold level A' assumes an equal value to the Doppler shift amount that represents the maximum trackable moving speed for the linear equalization device when the integration period in the linear equalization device provided in linear equalizer 116 is made greater than the minimum period.

Then, Doppler frequency detector 108 compares the measured Doppler shift amount to threshold level A' (ST5100).

If as a result o this comparison the Doppler shift amount is greater than threshold level A', a decision is made that the mobile station apparatus is moving at a high speed that the linear equalization device provided in linear equalizer 116 is unable to follow, and the receiving scheme of RAKE reception is selected (ST5700).

If the Doppler frequency amount is below predetermined threshold level A' , the interference power from other cells measured by interference power measurer 110 is compared to predetermined threshold level B1 (ST5200). If as a result of this comparison the interference power is below predetermined threshold level B1, the receiving scheme of linear equalization is selected (ST5600). In addition, if the interference power is greater than predetermined threshold level B1, the SIR measured by SIR measurer 106 is compared to predetermined threshold level C1 (ST5300). If the SIR is greater than predetermined threshold level C1, the receiving scheme of linear equalization is selected (ST5600).

If the SIR is below predetermined threshold level C1, the interference power is again compared to predetermined threshold level B2 (ST5400). Predetermined threshold level B2 for comparison with interference power in ST5400 assumes a greater level than predetermined threshold level B1 in ST5200. If as a result of this comparison the interference power is greater than predetermined threshold level B2, the receiving scheme of RAKE reception is selected (ST5700) .

On the other hand, if the interference power is below predetermined threshold level B2, the SIR is then compared to predetermined threshold level C2 (ST5500). Threshold level C2 for comparison with the SIR in ST5500 assumes a greater level than predetermined threshold level C1 in ST5300. If as a result of this comparison the SIR is below predetermined threshold level C2, the receiving scheme of RAKE reception is selected (ST5700). If the SIR is greater than predetermined threshold level C2, the receiving scheme of linear equalization is selected (ST5600).

Where the receiving scheme is selected thus, comparisons are drawn between threshold levels that are based on the minimum period and the measured Doppler shift amount, so that, according to the communication status of the base station apparatus, even when the mobile station apparatus is moving at a high speed, the receiving scheme of linear equalization is performed.

Thus, according to this embodiment, based on the SIR, Doppler shift amount, interference power and minimum period, linear equalization is selected for the receiving scheme. Consequently, the mobile station apparatus, even when moving at a high speed, may be trackable by the linear equalization device depending on the communication status at the base station apparatus, and linear equalization is selected, thereby improving overall system throughput.

Although a case has been described with this embodiment where, upon receiving scheme selection, interference power and the SIR are each provided with two threshold levels, the present invention is by no means limited to this, and any number of threshold levels can be set.

### (Embodiment 5)

A feature of Embodiment 5 of the present invention lies in having the base station apparatus detect when the integration period for the known signal that enables the mobile station apparatus to perform linear equalization--in other words, the period for updating the coefficient in the linear equalization device--can be shortened, thereby determining the optimal integration period and selecting the receiving scheme at the mobile station apparatus.

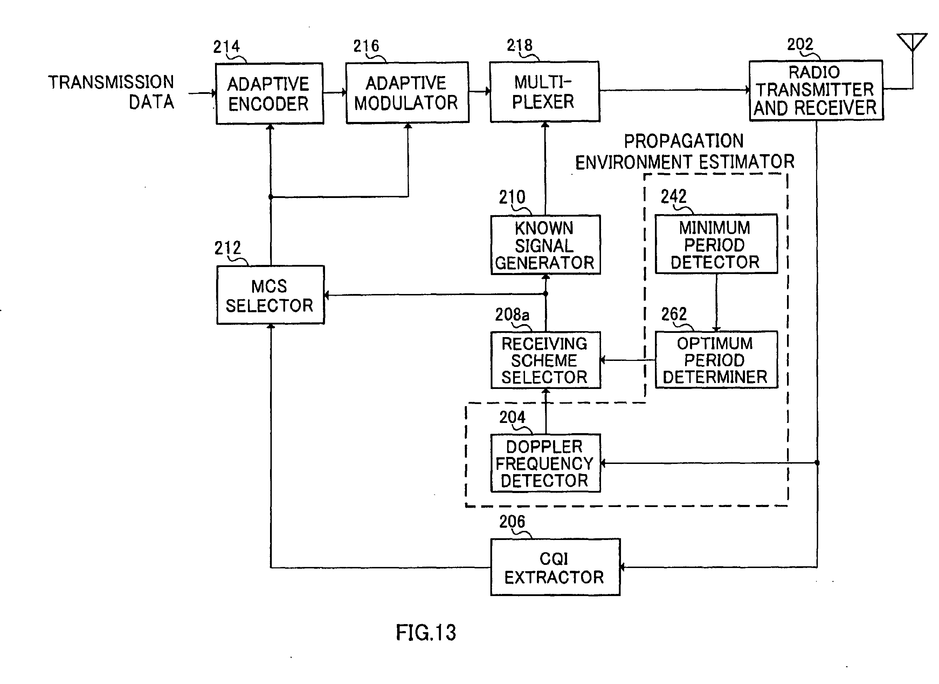

FIG.13 is a block diagram showing the configuration of a base station apparatus according to this embodiment. Parts of the base station apparatus shown in this figure that are identical to those of the base station apparatus shown in FIG.6 and FIG.10 are assigned the same numerals without further explanations. In addition, let us assume that the base station apparatus shown in the figure communicates with the mobile station apparatus shown in FIG.7 (Embodiment 3).

The base station apparatus shown in FIG.13 has radio transmitter and receiver 202, Doppler frequency detector 204, CQI extractor 206, receiving scheme selector 208a, report signal generator 210, MCS selector 212, adaptive encoder 214, adaptive modulator 216, multiplexer 218, minimum period detector 242, and optimal period determiner 262.

Based on the Doppler shift amount and optimal period (described later) receiving scheme selector 208a selects the receiving scheme of either RAKE reception or linear equalization.

Optimum period determiner 262 determines the optimal period that is greater than the minimum trackable period for the linear equalization device provided in the mobile station apparatus and that is optimal for the implementation of linear equalization. Doppler frequency detector 204, minimum period detector 242, and optimal period determiner 262 constitute a propagation path environment estimator in this embodiment.

Next, the operation of receiving scheme selection for the mobile station apparatus at the base station apparatus of the above configuration will be described.

First, based on the optimal period, the threshold level for the Doppler shift amount is determined. This threshold level assumes an equal value to the Doppler shift amount that represents the maximum trackable moving speed for the linear equalization device when the integration period in the linear equalization device is made the optimal period.

Then, the Doppler shift amount measured by Doppler frequency detector 204 is compared to this threshold level. If the Doppler shift amount is below the threshold level, linear equalization is selected for the receiving scheme at the mobile station apparatus. On the other hand, if the Doppler shift amount is greater than the threshold level, a decision is made that the mobile station apparatus is moving at a high speed and that the linear equalization device is unable to follow, and so RAKE reception is selected for the receiving scheme at the mobile station apparatus.

By this means, a comparison is drawn between a threshold level that is based on the optimal period and the measured Doppler shift amount, so that, according to the communication status of the base station apparatus, even when the mobile station apparatus is moving at a high speed, the receiving scheme of linear equalization is selected.

Thus, according to this embodiment, the threshold level for the Doppler shift amount is set in accordance with the communication status and the receiving scheme at the mobile station apparatus is selected at the base station apparatus, the selected receiving scheme is reported to the mobile station apparatus. When the receiving scheme of liner equalization is selected, the MCS are selected on the premise that linear equalization is performed at the mobile station apparatus and the data transmission is performed, so that the base station apparatus is able to perform the data transmission at heightened transmission rates and the mobile station apparatus is able to correctly perform linear equalization, modulation, and decoding of the received data, thereby improving overall system throughput.

### (Embodiment 6)

A feature of Embodiment 6 of the present invention lines in selecting the receiving scheme based on SIR measurement result alone and reducing power consumption.

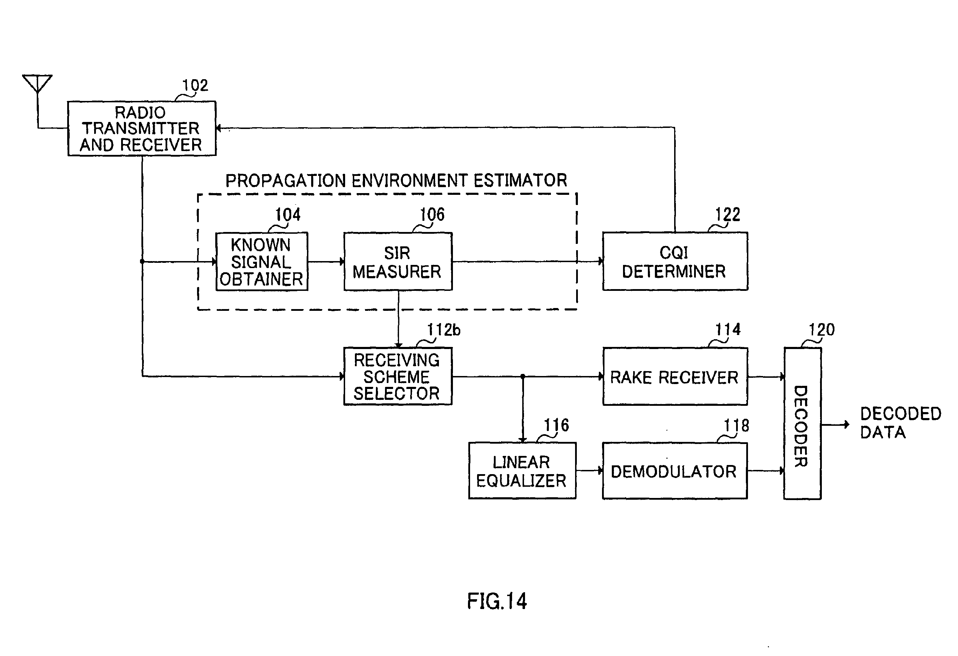

FIG.14 is a block diagram showing the configuration of a mobile station apparatus according to this embodiment. Parts of the mobile station apparatus shown in this figure that are identical to those of the mobile station apparatus shown in FIG.1 are assigned the same numerals without further explanations.

The mobile station apparatus shown in FIG.14 has radio transmitter and receiver 102, known signal obtainer 104, SIR measurer 106, receiving scheme selector 112b, RAKE receiver 114, linear equalizer 116, demodulator 118, decoder 120, and CQI determiner 122.

Based on the SIR alone, receiving scheme selector 112b selects the receiving scheme of either RAKE reception or linear equalization. To be more specific, when the SIR is below a predetermined threshold level, receiving scheme selector 112b selects the receiving scheme of RAKE reception. On the other hand, if the SIR is greater than the predetermined threshold level, the receiving scheme of linear equalization is selected. Known signal obtainer 104 and SIR measurer 106 constitute a propagation environment estimator in this embodiment.

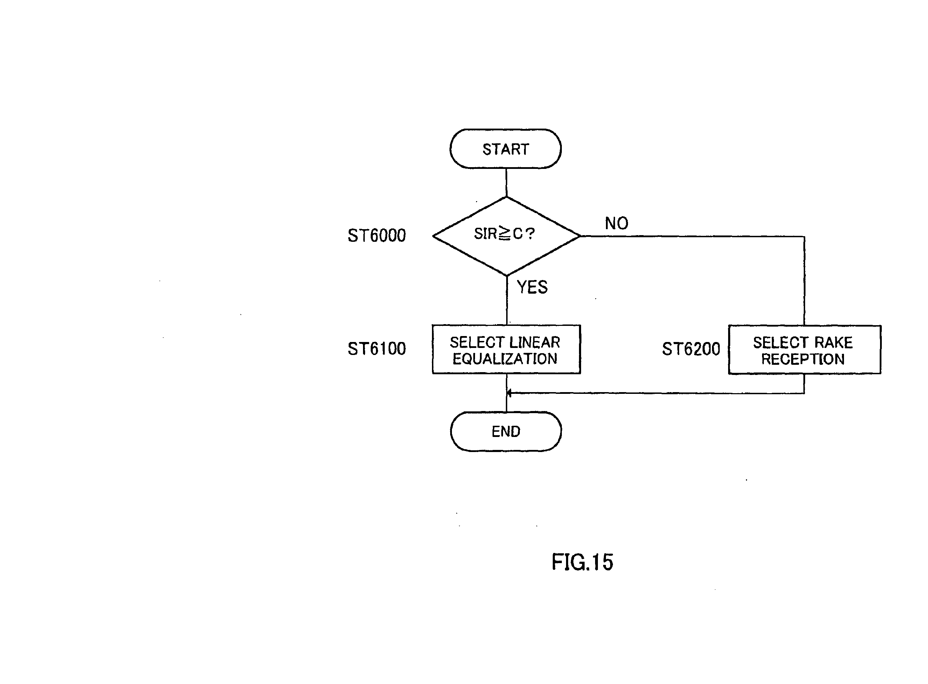

Next, the receiving scheme selection operation at the mobile station apparatus of the above configuration will be described in detail with reference to the flowchart of FIG.15. The following selection operation takes place in receiving scheme selector 112b.

First, the SIR measured by SIR measurer 106 is compared to predetermined threshold level C (ST6000).

If as a result of this comparison the SIR is greater than predetermined threshold level C, the receiving scheme of linear equalization is selected (ST6100) . On the other hand, if the SIR is greater than predetermined threshold level C, the receiving scheme of RAKE reception is selected (ST6200).

Generally, when the SIR is low, the mobile station apparatus is most likely to be near the cell edge. Near the cell edge, the main factors that lead the mobile station apparatus to deteriorated error rates include thermal noise and interference from the adjoining cells. Thermal noise and interference from the adjoining cells are difficult to cancel by means of linear equalization, and RAKE reception achieves better error rate characteristics. Consequently, when the SIR is below predetermined threshold level C, the receiving scheme of RAKE reception is selected.

On the other hand, when the SIR is high, the mobile station apparatus is most likely to be near the center of the cell (that is, near the base station apparatus). Near the center of the cell, the main factors that lead the mobile station apparatus to deteriorated error rates include the impact of multipath. The impact of multipath can be cancelled at ease by means of linear equalization. Consequently, if the SIR is greater than the threshold level, the receiving scheme of linear equalization is selected.

Thus, according to this embodiment, based on the SIR measurement result alone, the receiving scheme that will achieve better error rate characteristics is selected, thereby making a circuit for Doppler shift amount measurement unnecessary and reducing power consumption by large.

### (Embodiment 7)

A feature of Embodiment 7 of the present invention lies in selecting the receiving scheme using information about the modulation scheme and the number of multiplex codes provided for by the MCS.

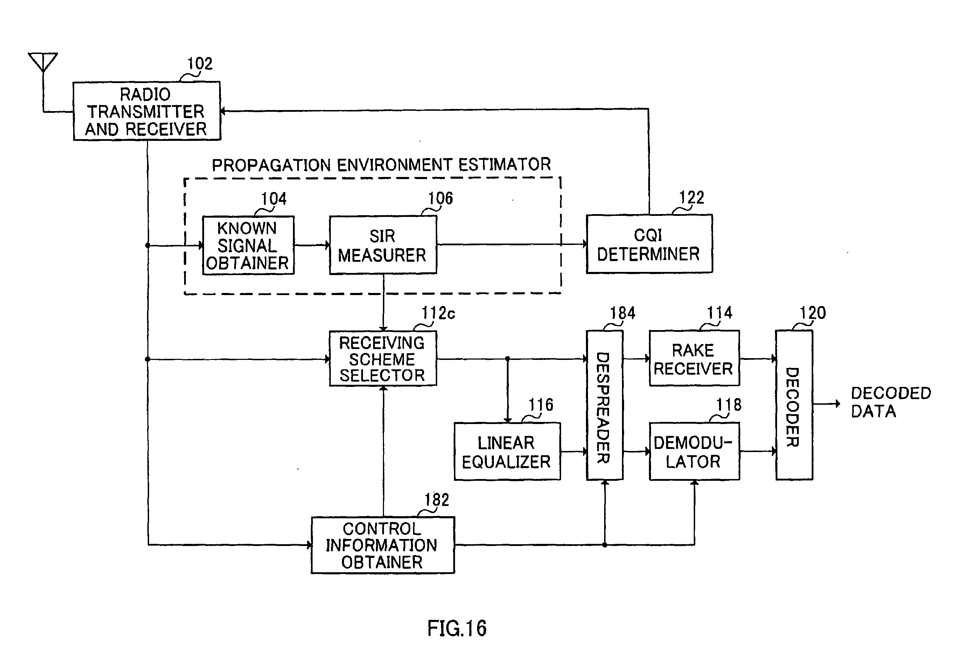

FIG.16 is a block diagram showing the configuration of a mobile station apparatus according to this embodiment. Parts of the mobile station apparatus shown in this figure that are identical to those of the mobile station apparatus shown in FIG.1 are assigned the same numerals without further explanations.

The mobile station apparatus shown in FIG.16 has radio transmitter and receiver 102, known signal obtainer 104, SIR measurer 106, receiving scheme selector 112c, RAKE receiver 114, linear equalizer 116, demodulator 118, decoder 120, CQI determiner 122, control information obtainer 182, and despreader 184.

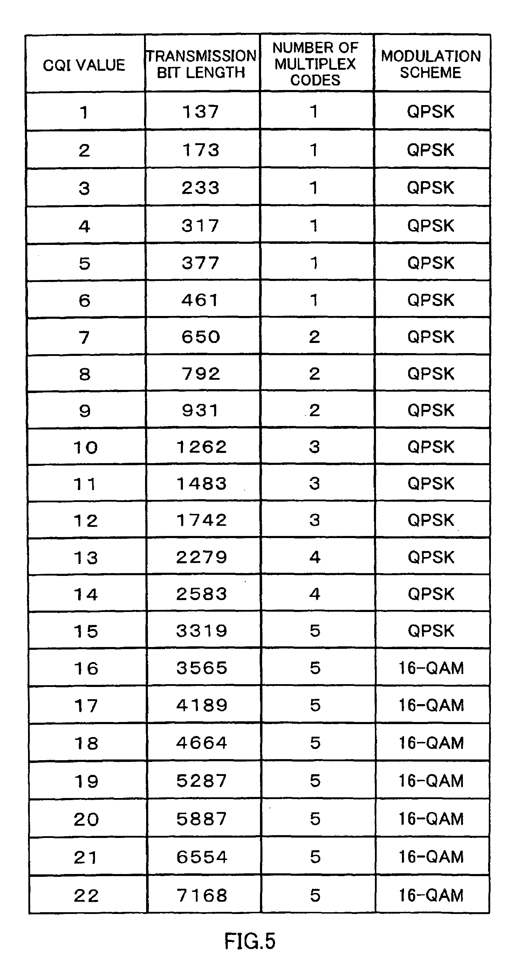

Control information obtainer 182 obtains the control information relating to the MCS selected at the base station apparatus and contained in the received signal, and reports this to receiving scheme selector 112c. When the base station apparatus changes the MCS based on the CQI (for instance, in the case shown in FIG.5, the data transmission is performed by changing the transmission bit length, the number of multiplex codes, and the modulation scheme), the base station apparatus transmits the control information relating to the changed MCS with the transmission data. By this means, the mobile station apparatus learns the modulation scheme of the transmission data, thereby enabling correct demodulation.

Despreader 184 despreads the received data according to the number of multiplex codes as reported by way of the control information.

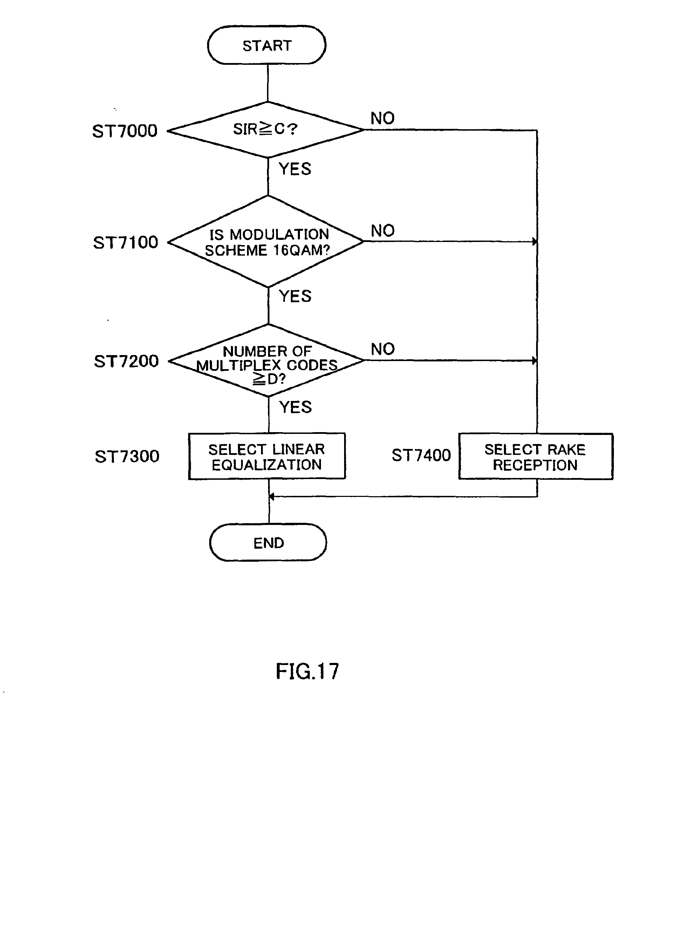

Next, the receiving scheme selection operation at the mobile station apparatus of the above configuration will be described in detail with reference to the flowchart of FIG.17. The following selection operation takes place in receiving scheme selector 112c.

First, the SIR measured by SIR measurer 106 is compared to predetermined threshold level C (ST7000).

If as a result of this comparison the SIR is below predetermined threshold level C, the receiving scheme of RAKE reception is selected (ST7400).

When the SIR is below predetermined threshold level C, a decision is made as to whether or not the modulation scheme reported in the control information is 16QAM (ST7100). If as a result of this decision the modulation scheme is not 16QAM but is QPSK or BPSK, the receiving scheme of RAKE reception is selected (ST7400). If the modulation scheme is 16QAM, the number of multiplex codes reported in the control information is compared to predetermined threshold level D (ST7200). If the number of multiplex codes is greater than predetermined threshold level D, linear equalization is selected (ST7300). On the other hand, if the number of multiplex codes is below predetermined threshold level D, the receiving scheme of RAKE reception is selected (ST7400).

Where the receiving scheme is selected thus, only when the SIR is great, the modulation scheme is 16QAM, and the number of multiplex codes is great, is the receiving scheme of linear equalization selected.

Although QPSK and BPSK lower the efficiency of data transmission compared to 16QAM, the error rate characteristics improve. In addition, when the number of multiplex codes is small, the interference between symbols decreases, and consequently the error rate characteristics improve. According to this embodiment, when such MCS that result in good error rate characteristics are selected, the receiving scheme of RAKE reception is selected. Thus, only when such MCS that result in poor error rate characteristics are selected, is it necessary to operate the linear equalization device, thereby further reducing power consumption compared to above Embodiment 6.

Then, when the receiving scheme of RAKE reception is selected, the received signal is despread by despreader 184 according to the number multiplex codes reported in the control information, later RAKE-received by RAKE receiver 114, and decoded by decoder 120, and thus the decoded data is obtained.

On the other hand, when the receiving scheme of linear equalization is selected, the received signal is subjected to linear equalization in linear equalizer 116 and despread in despreader 184. The despread signal is demodulated by demodulator 118 in accordance with the modulation scheme reported in the control information and decoded in decoder 120, and thus the decoded data is obtained.

Thus, according to this embodiment, based on the SIR measurement result and control information, only when the SIR is greater than a predetermined threshold level and the kind of MCS are selected that result in poor error rate characteristics, is linear equalization selected for the receiving scheme, thereby making a circuit for Doppler shift amount measurement unnecessary, shortening the time of operating the linear equalization device, and reducing power consumption by large.

Although a case has been described with the present embodiment where the receiving scheme is selected using the both information of the modulation scheme and the number of multiplex codes, contained in the control information, the present invention is by no means limited to this, and it is equally possible to select the receiving scheme using only one of the information of the modulation scheme and the number of multiplex codes.

In addition, although a case has been described with the present embodiment where linear equalization is selected for the receiving scheme in 16QAM and the receiving scheme of RAKE reception is selected in QPSK and BPSK, the modulation schemes are by no means limited to these and are good as long as RAKE reception is selected for the receiving scheme when the modulation schemes with good error rate characteristics are selected.

As described above, according to the present invention, it is possible to improve overall system throughput.

The present application is based on Japanese Patent Application No.2002-264098, filed on September 10, 2002, and Japanese Patent Application No.2003-104428, filed on April 8, 2003, entire content of which is expressly incorporated herein by reference.

### Industrial Applicability

The present invention is applicable to wireless communication apparatuses, receiving apparatuses, and receiving scheme selection methods.

## Claims

1. A wireless communication apparatus comprising:
an estimator that estimates a propagation environment of a signal; and
a selector that selects a receiving scheme for the signal from two or more receiving schemes including at least linear equalization.

2. The wireless communication apparatus according to claim 1, wherein the estimator comprises:
a known signal obtainer that obtains a known signal contained in the signal;
a reception quality measurer that measures a reception quality of the known signal obtained;
a moving speed detector that detects a moving speed of the wireless communication apparatus; and
an interference power measurer that measures a power of interference waves that arrive from other cells than a cell where said wireless communication apparatus belongs.

3. The wireless communication apparatus according to claim 1, wherein the selector selects linear equalization for the receiving scheme when a moving speed of the wireless communication apparatus is below a predetermined speed level and an impact of an interference wave is below a predetermined level.

4. The wireless communication apparatus according to claim 1, wherein the selector selects linear equalization for the receiving scheme at a communicating station when a moving speed of said communicating station is below a predetermined speed level.

5. The wireless communication apparatus according to claim 3,
wherein the estimator comprises a minimum period obtainer that obtains a minimum period for updating a coefficient for linear equalization processing; and
wherein the selector determines the predetermined speed level based on the minimum period obtained.

6. The wireless communication apparatus according to claim 4,
wherein the estimator comprises a minimum period obtainer that obtains a minimum period for updating a coefficient for linear equalization processing; and
wherein the selector determines the predetermined speed level based on the minimum period obtained.

7. The wireless communication apparatus according to claim 1, further comprising a determiner that determines a channel quality indicator for a transmission rate selection in accordance with a reception quality of a signal,
wherein, when linear equalization is selected by the selector for the receiving scheme, the determiner determines the channel quality indicator based on a premise of performing linear equalization.

8. The wireless communication apparatus according to claim 1, further comprising:
a reporter that reports the receiving scheme selected by the selector to a communicating station; and
a transmitter that transmits a signal at a transmission rate based on the selected receiving scheme and a channel quality indicator,
wherein, when the selected receiving scheme is linear equalization, the transmitter transmits a signal at a transmission rate based on a premise that the communicating apparatus performs linear equalization.

9. The wireless communication apparatus according to claim 1,
wherein the estimator comprises a known signal obtainer that obtains a known signal contained in the signal and a reception quality measurer that measures a reception quality of the known signal obtained; and
wherein the selector selects linear equalization for the receiving scheme when the reception quality obtained is greater than a predetermined level.

10. The wireless communication apparatus according to claim 1, further comprising an obtainer that obtains control information relating to a modulation scheme of the signal,
wherein the selector selects the receiving scheme for the signal in accordance with the propagation environment as estimated by the estimator and the modulation scheme.

11. The wireless communication apparatus according to claim 1, further comprising an obtainer that obtains control information relating to the number of multiplex codes with which the signal is multiplexed,
wherein the selector selects the receiving scheme for the signal in accordance with the propagation environment as estimated by the estimator and the number of multiplex codes.

12. A receiving apparatus comprising:
an obtainer that obtains information relating to a receiving scheme selected from two or more receiving schemes that include at least linear equalization in accordance with a propagation environment; and
a receiver that receives a signal received by the receiving scheme specified by the receiving scheme information obtained.

13. A mobile station apparatus comprising the wireless communication apparatus of claim 1.

14. A base station apparatus comprising the wireless communication apparatus of claim 1.

15. A mobile station apparatus comprising the receiving apparatus of claim 12.

16. A base station apparatus comprising the receiving apparatus of claim 12.

17. A receiving scheme selection method comprising the steps of:
estimating a propagation environment of a signal; and
selecting a receiving scheme for the signal from two or more receiving schemes that include at least linear equalization in accordance with the propagation environment estimated.
